Europäisches Patentamt

European Patent Office

Office européen des brevets

(11) Veröffentlichungsnummer: **0 110 035**
**A1**

(12) **EUROPÄISCHE PATENTANMELDUNG**

(21) Anmeldenummer: 83109134.3

(22) Anmeldetag: 15.09.83

(51) Int. Cl.³: **F 16 B 41/00**, B 60 R 9/04

(30) Priorität: 26.11.82 DE 3243878

(43) Veröffentlichungstag der Anmeldung: 13.06.84
**Patentblatt 84/24**

(84) Benannte Vertragsstaaten: **AT BE CH DE FR GB IT LI LU NL SE**

(71) Anmelder: **Tittel, Eberhard, Lagerstrasse 1, D-7981 Grünkraut-Gullen (DE)**

(72) Erfinder: **Tittel, Eberhard, Lagerstrasse 1, D-7981 Grünkraut-Gullen (DE)**

(74) Vertreter: **Schmidt-Evers, Jürgen, Dipl.-Ing. et al, Patentanwälte Dipl.-Ing. H .Mitscherlich Dipl.-Ing. K. Gunschmann Dipl.-Ing. Dr.rer.nat. W. Körber Dipl.-Ing. J. Schmidt-Evers Dipl.-Ing. W. Melzer Steinsdorfstrasse 10, D-8000 München 22 (DE)**

(54) **Verriegelbare Haltevorrichtung.**

(57) Es wird eine verriegelbare Haltevorrichtung angegeben, bei der in einem drehbaren Teil wie dem Kopf (12) eines Gewindebolzens (9) oder einer auf einem Gewindebolzen drehbaren Mutter Durchgangsöffnungen (33) vorgesehen sind, durch die ein Steckschloß (32) einsetzbar und an mindestens einem, vorteilhaft an beiden, miteinander zu verklemmenden Teilen (1, 7) einführbar ist. Im verriegelten Zustand, nach Abziehen des Schlüssels (43) vom Steckschloß (32), ist ein Drehen des Kopfes (12) zur Lösung der Verbindung zwischen den beiden Teilen (1, 7) verhindert. Mittels eines überstülpbaren Deckels (45) ist die Durchgangsöffnung (33) abdeckbar. In dem Kopf (12) können über den Umfang verteilt mehrere Durchgangsöffnungen (33) vorgesehen sein.

Die Erfindung ist insbesondere anwendbar bei Dachgepäckträgern, deren Haltestütze (1) mittels eines Anpreßteils (7) an der Dachrinne von Kraftfahrzeugen durch Aneinanderandrücken mittels Verdrehen einer Gewindebolzen-Anordnung (6) anklemmbar ist.

EP 0 110 035 A1

# VERRIEGELBARE HALTEVORRICHTUNG

Die Erfindung betrifft eine verriegelbare Haltevorrichtung gemäß dem Oberbegriff des Anspruchs 1.

Haltevorrichtungen dieser Art werden häufig zur Halterung von Dachgepäckträgern am Dach eines Kraftfahrzeugs verwendet. Das Halteteil ist dann durch die Haltestütze des Dachgepäckträgers gebildet, dessen stegartige Unterkante in die Dachrinne als drittem Teil einsetzbar ist, wobei ein hakenförmiges Unterende des Anpreßteils die Dachrinne von unten untergreift. Bei Haltevorrichtungen dieser Art ist es sehr wesentlich, daß Unbefugte, auch mittels einfach betätigbarer Werkzeuge, die Klemmung nicht lösen können.

Verriegelbare Haltevorrichtungen der eingangs genannten Art sind insbesondere bekannt aus der EU-OS oo16738 und der EU-OS oo3o 926. Bei beiden Haltevorrichtungen ist in dem Kopf ein Zylinderschloß eingebaut, daß über einen Verriegelungsmechanismus in der einen Stellung, der Schließstellung, ein Drehen des Kopfes mit dem Gewindebolzen ( äquivalent dazu der Mutter gegenüber dem Gewindebolzen) verhindert, während in der anderen Stellung, der Offenstellung, eine Drehung möglich ist, wodurch die Klemmeinrichtung gelöst werden kann. Beide Lösungen bedingen im Inneren des Kopfes einen komplizierten mechanischen Aufbau mit gegeneinander bewegbaren Teilen.

Im ersteren Fall ist der Gewindebolzen in eine im Inneren des Kopfes drehbaren Wanne eingesetzt, deren

BAD ORIGINAL

Außenumfang derart profiliert ist, daß in der Offenstellung das Verriegelungselement des Zylinderschlosses in Vertiefungen der Umfangswand eingreift, wodurch der Kopf zusammen mit der Wanne drehbar ist.

In der anderen Schließstellung, sind Verriegelungselement und Umfangswand der Wanne außer Eingriff, wodurch der Kopf gegenüber der Wanne frei drehbar ist.

Im letzteren Fall ist das im Inneren des Kopfes befindliche Ende des Gewindebolzens profiliert ausgebildet und umgreift das Verriegelungselement den profilierten Abschnitt. In der Schließstellung des Zylinderschloßes umgreift das Verriegelungselement den profilierten Abschnitt des Gewindebolzens derart, daß dieser in dem Verriegelungselement frei drehbar ist.
In der Offenstellung umgreift das Verriegelungselement den profilierten Abschnitt derart, daß sie gegeneinander in Anlage sind, wodurch der Kopf zusammen mit dem Gewindebolzen drehbar ist.

Zusammenfassend zeigen beide Haltevorrichtungen mit einem Zylinderschloß versehene Knebelschrauben, bei denen in einer ersten Schließstellung des Zylinderschlosses der Knebelkopf mit dem Schraubenschaft festverbunden ist, und bei denen in einer zweiten Schließstellung der Knebelkopf gegenüber dem Schraubenschaft frei drehbar ist.

Übereinstimmend ist der Kopf bei beiden Haltevorrichtungen kompliziert ausgebildet, was hohe Fertigungskosten zur Folge hat. Darüberhinaus besteht die Gefahr, daß der Berechtigte versehentlich den Schlüssel im Zylinderschloß stecken läßt. Ist dieses in der Schließstellung, kann der Unbefugte so-

BAD ORIGINAL

0110035

fort Zugriff erlangen. In der Schließ- oder der Offenstellung kann ferner der Unbefugte einen Abdruck des Schlüssels fertigen. Darüberhinaus besteht die Gefahr einer Verschmutzung, Korrodierung oder Vereisung des Zylinderschloßes, wenn keine gesonderten Maßnahme zur Abdeckung vorgesehen werden.

Es ist daher Aufgabe er Erfindung, eine verriegelbare Haltevorrichtung der eingangs genannten Art so auszubilden, daß bei einfachem und damit kostengünstigem Aufbau hoher Schutz gegen Unbefugte erreicht ist.

Die Aufgabe wird durch die kennzeichnenden Merkmale des Anspruchs 1 gelöst.

Die Erfindung wird durch die Merkmale der Unteransprüche weitergebildet.

Die Erfindung geht von dem Grundgedanken aus, daß die erwähnten Probleme mittels an sich bekannter Steckschlösser überwunden werden können. Steckschlösser haben die Eigenschaft, daß in der einen Stellung, der Schließstellung, der Schlüssel alleine abgezogen werden kann und die beiden gegeneinander verdrehbaren Teile des Steckschloßes in der entsprechend ausgebildeten Durchgangsöffnung verbleiben.

In der Offenstellung ist der Schlüssel nur zusammen mit beiden Teilen aus der Durchgangsöffnung herausziehbar.
Andererseits muß zum Verriegeln das gesamte Steckschloß erst in die Durchgangsöffnung mit Hilfe des Schlüssels eingeführt werden, wodurch bereits automatisch nicht vergessen wird, den Schlüssel abzuziehen.

BAD ORIGINAL

0110035

Darüberhinaus besteht die Möglichkeit, kurzzeitig die Haltevorrichtung unverriegelt zu lassen, ohne daß es von außen erkennbar wäre, insbesondere dann, wenn zur Abdeckung der mindestens einen Durchgangsöffnung ein Deckel verwendet wird.

Es zeigt sich, daß der mit dem Gewindebolzen einstückig verbundene Kopf ( äquivalent dazu die auf einen mit dem Halteteil einstückig verbundenen Gewindebolzen aufschraubbare Mutter) in einfacher Weise als Formteil ausgebildet werden kann, es ist nämlich lediglich die mindestens eine Durchgangsöffnung, gegebenenfalls eine Aufnahmeanordnung zur Aufnahme eines einklemmbaren Deckels vorzusehen.

Die erfindungsgemäße Haltevorrichtung hat noch einen weiteren Vorteil, der darauf beruht, daß das Steckschloß vom Kopf unabhängig ist und damit auch von diesem unabhängig erworben werden kann. Bei Verlust des Steckschloßes kann dieses durch ein neues ersetzt werden. Bei Verlust des Schlüssels bei in Schließstellung befindlichem Steckschloß muß nicht unbedingt der gesamte Kopf zerstört werden wie bei den bekannten Haltevorrichtungen.

Die Erfindung wird anhand der in der Zeichnung dargestellten Ausführungsbeispiele näher erläutert.

Es zeigen

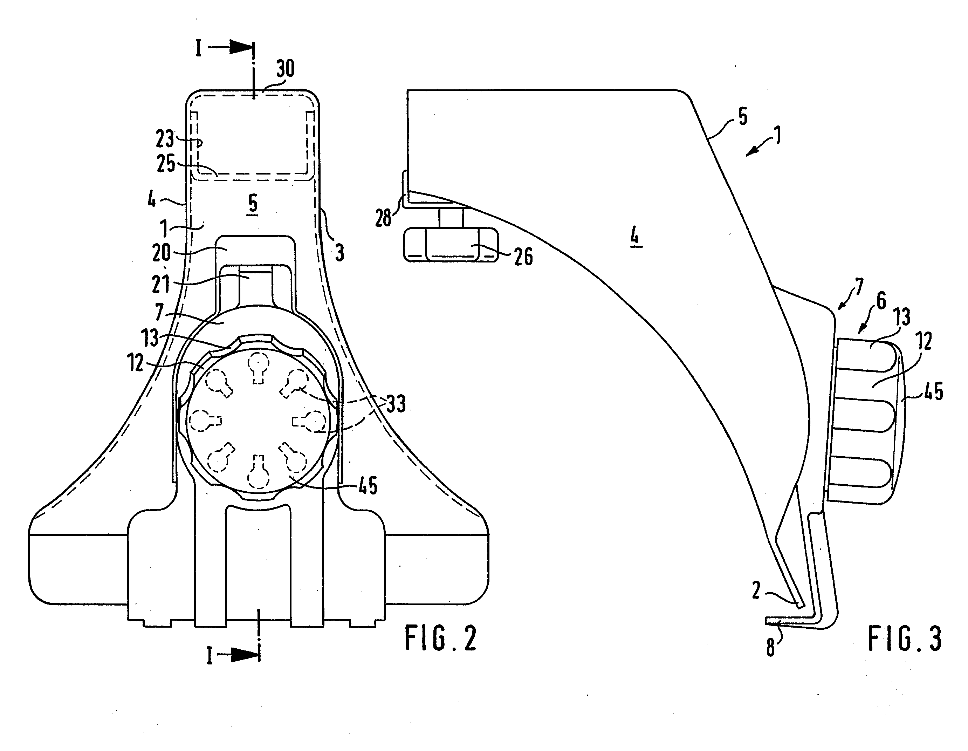

Fig. 1   im Schnitt, Fig. 2 in Stirnansicht und
Fig. 3   in Seitenansicht eine das Halteteil bildende Haltestütze,

Fig. 4   eine Ansicht des Kopfes bei Blick auf den
      Schraubbolzen,

Fig. 5   im Schnitt und Fig. 6 in Seitenansicht
      eine andere Ausführungsform der Klemmeinrichtung,

BAD ORIGINAL

0110035

Fig. 7    in Teilansicht die Klemmeinrichtung mit
          abgenommenen Deckel auf die den Deckel aufnehmende Seite,

Fig. 8 bis 11   im Schnitt und in Seitenansicht eine
          andere Ausführungsform der Klemmeinrichtung
          sowie ein anderes Steckschloß.

Die Erfindung wird im folgenden mit Bezug auf einen
Dachgepäckträger erläutert, der insbesondere zum
Transport von Sportgegenständen wie Skiern, Segelbrettern, Fahrrädern oder dergleichen geeignet ist.

Die erfindungsgemäße Lehre ist auch bei Dachgepäckträgern für Kraftfahrzeuge anwendbar, die zum Transport üblicher Lasten wie für gewerbliche als auch
für private Zwecke geeignet sind. Ganz allgemein
ist die Erfindung dort anwendbar, wo zum Verbinden
eines Halteteils mit einem dritten Teil ein Anpreßteil verwendet wird, wobei die gegenseitige Verklemmung verriegelbar sein soll.

Ein Dachgepäckträger wird in die Dachrinnen des
Daches eines Kraftfahrzeugs lösbar gehaltert, und
zwar festgeklemmt. Dabei muß nicht nur die Klemmung
zwischen dem Dachgepäckträger und der Dachrinne
einwandfrei und rutschfest erfolgen. Vielmehr muß
der Dachgepäckträger zwei sich scheinbar widersprechende Bedingungen gleichzeitig erfüllen, er muß
einerseits geringen Fahrwiderstand besitzen und soll
andererseits gegen unbefugte Benutzung sicherbar
sein, was insbesondere bei den vorstehend erwähnten
Sportgeräten von erheblicher Bedeutung ist.

Derartige Dachgepäckträger weisen eine Haltestütze
1 als Halteteil auf, die eine stegartige Unterkante 2

BAD ORIGINAL

0110035

besitzt, die zum Einsetzen in eine Dachrinne am Rand des Daches eines Kraftfahrzeugs (nicht dargestellt) bestimmt ist. Die Haltestütze 1 ist als ein von der stegartigen Unterkante 2 nach oben und in Richtung auf das Dach geneigt verlaufendes Plattenelement ausgebildet, das Seitenwände 3,4 und einen nach außen weisenden Abschnitt 5 besitzt, wodurch im Horizontalschnitt ein U-Profil erscheint, dessen Steg durch den nach außen weisenden Abschnitt 5 gebildet ist. Die Haltestütze 1 ist als Formteil derart ausgebildet, daß der Übergang von der stegartigen Unterkante 2, die sich im wesentlichen geradlinig erstreckt, zum Oberende der Haltestütze 1, die einen im wesentlichen U-Querschnitt in der Horizontalebene besitzt, allmählich erfolgt, was durch eine geschwungene Ausbildung der Seitenwände 3,4 erreicht ist.

Mittels einer Gewindebolzen-Anordnung 6 als Klemmeinrichtung ist an der Haltestütze 1 verstellbar ein Anpreßteil 7 fest aber lösbar angebracht. Das Anpreßteil 7 ist im wesentlichen flächig ausgebildet und weist ein hakenartiges Unterende 8 auf, das die Dachrinne untergreift.

Die Gewindebolzen-Anordnung 6 besteht aus einem Gewindebolzen 9, der in ein Gewindeloch 1o der Haltestütze 1 eingreift und der das Anpreßteil 7 über ein Langloch 11 durchsetzt. Am dem Eingriff mit dem Gewindeloch 1o entgegengesetzten Ende trägt der Gewindebolzen 9 einen Kopf 12, der als Drehgriff ausgebildet ist.

Äquivalent dazu kann der Bolzen einstückig mit der Haltestütze 1 verbunden sein und der Griff als auf dem Gewinde des Bolzens drehbare Mutter ausgebildet sein.

BAD ORIGINAL

Zur besseren Handhabung trägt der Kopf 12 der Gewindebolzen-Anordnung 6 über den Umfang verteilte Griffmulden 13. Durch Drehen des Kopfes 12 erfolgt eine Verstellung des Anpreßteils 7 gegenüber der Haltestütze 1 derart, daß einerseits die stegartige Unterkante 2 in die Dachrinne hineindrückt, und andererseits das hakenartige Unterende 8 von unten gegen die Dachrinne drückt derart, daß die Dachrinne zwischen stegartiger Unterkante 2 und hakenartigem Unterende 8 rutschfest eingespannt wird.

Die Haltestütze 1 weist eine Einprägung 14 auf, in der das Gewindeloch 1o vorgesehen ist. Das Anpreßteil 7 weist eine demgegenüber kleinere Einprägung 15 auf, in der das Langloch 11 vorgesehen ist und in der der Kopf 12 der Gewindebolzen-Anordnung 6 angreift. Die Einprägung 14 in der Haltestütze 1 weist auf Seiten der stegartigen Unterkante 2 eine bezüglich der Horizontalen schiefe Ebene 16 auf. In gleicher Weise weist die Einprägung 15 in dem Anpreßteil 7 auf Seiten des hakenartigen Unterendes 8 eine dazu kongruente schiefe Ebene 17 auf. Durch Drehen des Kopfes 12 gleiten die schiefen Ebenen 16 und 17 derart aufeinander, daß das Anpreßteil 7 gegenüber der Haltestütze 1 in vertikaler Richtung verstellt wird, wobei das Anpreßteil 7 darüberhinaus über das Langloch 11 bezüglich des Bolzens 9 geführt ist.

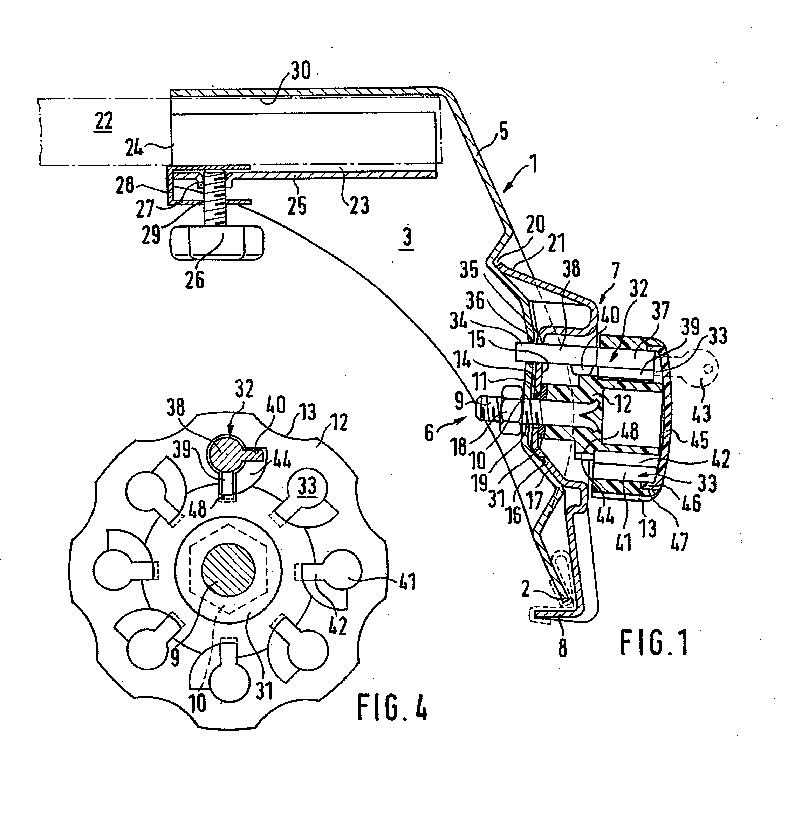

Bei dem in Figur 1 dargestellten Ausführungsbeispiel ist das Gewindeloch 1o durch Festschweißen einer Mutter 18 im Bereich eines Durchgangsloches 19 in der Einprägung 14 der Haltestütze 1 gebildet. Das Gewinde kann jedoch auch in anderer Weise in der Haltestütze 1 vorgesehen sein, wie durch einen auf-

BAD ORIGINAL

0110035

gebogenen Bereich der Einprägung (nicht dargestellt). Oberhalb der Einprägung 14 weist die Haltestütze 1 eine nutartige Führungsvertiefung 2o auf, in die ein stegartiger Stützlappen 21 des Anpreßteils 7 eingreifen kann.

Wie dargestellt können die Führungsvertiefung 2o und die Stützlappen 21 ebenfalls aufeinandergleitende schiefe Ebenen aufweisen.

Dachgepäckträger dieser Art sind üblicherweise mit einem einzelnen oder einer Anordnung von mehreren miteinanderverbundenen Querholmen 22 verbunden. Diese Verbindung kann einstückig sein, jedoch ist dann der derart ausgebildete Dachgepäckträger nur für Kraftfahrzeuge bestimmter Dachbreite geeignet. Daher werden vielfach Halterungen verwendet, mittels denen Querholme 22 fest aber lösbar an der Haltestütze 1 anlenkbar sind, wodurch Querholme vorgegebener Breite für Kraftfahrzeuge unterschiedlicher Dachbreite verwendbar sind. Bei derartigen Halterungen für Querholme 22 muß ebenfalls verhindert werden, daß die Verbindung zwischen Haltestütze 1 und Querholm 22 von Unbefugten, gegebenenfalls unter Einsatz eines Werkzeuges trennbar ist. Ferner ist der Querholm 22 in besonderer Weise korrissionsanfällig, wenn in ihm Bohrungen vorgenommen werden. Dies trifft insbesondere für beschichtete oder kunststoff-umhüllte Querholme 22 zu.

Zu diesem Zweck weist die dargestellte Haltestütze 1 an ihrem Oberende eine horizontale Aufnahme 23 auf, deren Querschnittsform derjenigen des im wesentlichen horizontalen Querholms 22 entspricht, beispielsweise rund oder rechteckig ist. Nahe dem zur Dachmitte weisenden offenen Ende 24 der Aufnahme 23 ist in deren unterem Wandabschnitt 25 eine Arretierschraube 26

BAD ORIGINAL

vorgesehen, die in einem Gewindeloch 27 in dem unteren Wandabschnitt 25 sitzt. Ein im wesentlichen V- oder U-förmiger Federbügel 28 umgreift das dem offenen Ende 24 zugewandte Ende des unteren Wandabschnitts 25, wobei der außen liegende Schenkel über eine Bohrung 29 von der Arretierschraube 26 durchsetzt ist und die Arretierschraube 26 auf den innen liegenden Schenkel wirkt. Durch Anziehen der Arretierschraube 26 wird der Querholm 22 gegen den oberen Wandabschnitt 3o gedrückt, wodurch der Querholm 22 in seiner Lage fixiert wird. Am nach außen weisenden Ende ist die Aufnahme 23 verschlossen, und zwar durch eine Verlängerung des nach außen weisenden Abschnitts 5 der Haltestütze 1. Dadurch wird verhindert, daß durch Einwirken auf das Ende des Querholms 22 dieser aus der Aufnahme 23 herausgeschlagen werden kann.

Die rutschfeste, und damit sichere, Befestigung des Dachgepäckträgers in der Dachrinne wird dadurch verbessert, daß sowohl die stegartige Unterkante 2 als auch das hakenförmige Unterende 8 eine Schutzmanschette aus elastischem Werkstoff wie Gummi oder dergleichen tragen. Die Schutzmanschetten können -wie in Strichlinien dargestellt- über einen elastischen Abschnitt miteinanderverbunden sein.

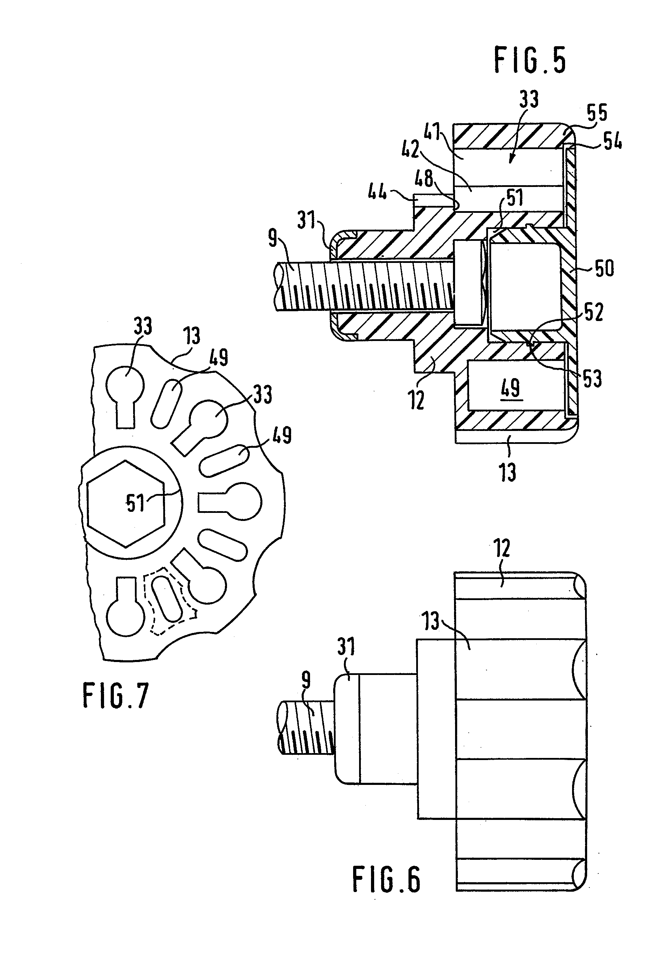

Der Kopf 12 besteht aus Kunststoff,während der Gewindebolzen 9 aus Metall ist und in an sich bekannter Weise mit dem Kopf 12 einstückig verbunden ist. Bei dem Ausführungsbeispiel gemäß Figur 1 erfolgt die einstückige Verbindung durch Spreizklauen am Gewindebolzen 9, die in den Körper des Kopfs 12 eingegossen sind. Jedoch kann auch ein Sechskant-Bolzenkopf (vgl. z:B. Fig. 5) des Gewindebolzens 9 in den Kopf 12 eingegossen sein.

BAD ORIGINAL

Ferner weist das dem Anpreßteil 7 zugewandte Ende des Kopfs 12 ein in Figur 1 ringförmig ausgebildetes Metallstück 31 auf, das auf der dem Anpreßteil 7 zugewandten Seite Riefungen besitzt. Andererseits weist das Anpreßteil 7 im dem Metallstück zugewandten Abschnitt seiner Einprägung 15 eine Aufrauhung auf. Dadurch kann ein selbsttätiges Lösen der Gewindebolzen-Anordnung 6 während der Fahrt verhindert werden, falls nicht noch eine anderweitige Verriegelung eingreift, wie das im folgenden erläutert wird.

Erfindungsgemäß ist eine Verriegelung zwischen dem Anpreßteil 7 und der Haltestütze 1 mittels eines Schlosses dergestalt vorgesehen, daß in der Schließstellung das Verriegelungselement ein Lösen der durch die Gewindebolzen-Anordnung 6 gebildeten Klemmeinrichtung und damit ein Trennen von Anpreßteil 7 und Haltestütze 1 verhindert, dagegen in der Offenstellung ein Lösen der Klemmeinrichtung durch Drehen des Kopfes 12 möglich ist, was das Trennen von Haltestütze 1 und Anpreßteil 7 ermöglicht.

Erfindungsgemäß ist das Schloß durch ein Steckschloß 32 gebildet, das durch eine Durchgangsöffnung 33 in dem Kopf 12 steckbar ist und dessen der Haltestütze 1 naheliegende Ende 34 ein Loch 35 in dem Anpreßteil 7 sowie vorteilhaft auch ein Loch 36 in der Haltestütze 1 durchsetzt. Ein Steckschloß besteht bekanntlich aus zwei gegeneinander drehbaren Teilen 37 bzw. 38, deren erstes Teil 37 einen Bart 39 und deren zweites Teil ein Verriegelungselement 4o trägt. Entsprechend weist die Durchgangsöffnung 33 einen an den Querschnitt von erstem und zweitem Teil angepaßten zylindrischen Teil 41 sowie einen an den Querschnitt von Bart 39 und Verriegelungselement 4o angepaßten Nutteil 42 auf.

BAD ORIGINAL

Ferner sind die Abmessungen in Achsrichtung des zylindrischen Teils 41 derart, daß bei in die Durchgangsöffnung 33 eingestecktem Steckschloß 32 die beiden Teile 37 und 38 mittels eines Schlüssels 43 so gegeneinander verdrehbar sind, daß das Verriegelungselement 4o des zweiten Teils 38 den Kopf 12 so hintergreift, daß das Steckschloß 32 nicht mehr herausgezogen werden kann. Wird der Schlüssel 43 abgezogen ist die sichere Verriegelung erreicht. Gegebenenfalls und wie dargestellt, kann in den Kopf, vergl. Figur 4, eine Führung 44 für das Verriegelungselement 4o des zweiten Teils 38 vorgesehen sein. Ferner kann ein Anschlag/für den Bart 39 des ersten Teils 37 vorgesehen sein, was einerseits durch eine geeignete Ausbildung des Kopfes 12 und/oder andererseits durch eine geeignete Ausbildung des Endes 34 und der zugehörigen Löcher 35 und/oder 36 erreicht werden kann.

Vorteilhaft sind mehrere, beim dargestellten Ausführungsbeispiel 8, derart ausgebildete Durchgangsöffnungen 33 gleichmäßig über den Umfang verteilt in dem Kopf 12 vorgesehen.

Die Löcher 35,36 brauchen lediglich einmal vorgesehen sein, können jedoch auch mehrfach vorgesehen sein. Sind mehrere solcher Lochpaare 35,36 vorgesehen, können auch mehrere Steckschlösser 32 verwendet werden, was für bestimmte Anwendungsfälle von Vorteil sein kann, bei denen das Lösen von Haltestütze 1 und Anpreßteil 7 nur bei Anesenheit mehrerer Berechtigter möglich sein soll.

Ferner sind die Durchgangsöffnungen 33 einzeln, aber auch insgesamt abdeckbar. Beim Ausführungsbeispiel gemäß Figur 1 ist ein ebenfalls aus Kunststoff be-

BAD ORIGINAL

stehender kreisförmiger Deckel 45 mit hochgebogenem Rand 46 vorgesehen, der in eine entsprechende umlaufende Vertiefung 47 im Kopf 12 federnd einrastbar ist. Dadurch können die Durchgangsöffnungen 32, unabhängig davon ob ein Steckschloß 32 eingesetzt ist oder nicht, gegen Blicke von außen geschützt werden. Somit ist von außen nicht erkennbar, ob die Verriegelung mittels eines Steckschlosses 32 durchgeführt worden ist oder nicht. Vielmehr muß dazu erst der Deckel 45 entfernt werden, was bereits hinderlich ist.

Ferner kann die Schlüsselöffnung des Steckschlosses 32 durch Schmutz, Streusalz oder dergleichen nicht korrodieren oder einfrieren, weshalb mittels des Schlüssels 43 bei abgehobenem Deckel 45 die Verriegelung sehr schnell wieder gelöst werden kann.

Ein wesentlicher Vorteil ist, daß der Deckel 45 nur aufgestzt werden kann, wenn der Schlüssel 43 abgezogen ist. Es kann also nicht mehr vorkommen, daß versehentlich vergessen wird, den Schlüssel abzuziehen. Ein Unbefugter kann daher nicht einen Nachschlüssel anfertigen, um ihn gegebenenfalls anzuwenden.

Ein weiterer wesentlicher Vorteil ist, daß nachträglich auch herkömmliche Dachgepäckträger mit der erfindungsgemäß ausgebildeten Verriegelung versehen werden können, es ist lediglich erforderlich, die Gewindebolzen-Anordnung 6 gegen die erfindungsgemäß ausgebildete mit dem Steckschloß und den Durchgangsöffnungen auszutauschen, gegebenenfalls müßten lediglich die Löcher 35,36 nachträglich gebohrt werden.

Figur 4 zeigt als Beispiel die Verriegelungsstellung des Steckschlosses 32 in einer der Durchgangsöffnungen 33. Ferner ist auch der Anschlag 48 angedeutet,an dem der Bart 39 zur Anlage kommt, während das Verriegelungselement 4o darüberhinaus führbar ist und in der Füh-

BAD ORIGINAL

rung 44 verschwenkbar ist.

In den Figuren 5 bis 7 ist eine andere Ausführungsform der Gewindebolzen-Anordnung 6 dargestellt.
Insbesondere ist der Gewindebolzen 9 über einen Sechskant-Kopf in den Kopf 12 eingegossen. Ferner ist das
Metallstück 31 napfförmig ausgebildet. Wie bei dem
Ausführungsbeispiel gemäß Figur 4 weist der Kopf 12
über den Umfang verteilte Durchgangsöffnungen 33 für
ein Steckschloß 32 auf. Darüberhinaus sind jedoch
zwischen benachbarten Durchgangsöffnungen 33 Vertiefungen 49 vorgesehen, die im wesentlichen zur Materialeinsparung dienen und die ein Arbeiten des den Kopf 12
bildenden Materials bei erheblichen Temperaturschwankungen begrenzen. Ferner ist ein in anderer Weise
ausgebildeter Deckel 5o vorgesehen. Der Deckel ist
ebenfalls etwa kreisförmig, weist jedoch einen mittigen
rohrartigen Ansatz auf, der in eine entsprechende mittige kreisförmige Vertiefung 51 des Kopfes 12 einsetzbar ist. Eine rastende Verbindung zwischen dem Deckel
5o und dem Kopf 12 erfolgt über über den Umfang verteilte
noppenartige Ansätze oder einen in entsprechender Weise
kreisförmig vorspringenden Ring 52 , der in eine entsprechende Ringnut 53 in der Vertiefung 51 einrasten.
kann. Die Außenränder 54 des kreisförmigen Teils des
Deckels 5o sind seitlich von Rändern 55 des Kopfes 12
umgeben, so daß ein einfaches Ansetzen eines Werkzeuges zum Entfernen des Deckels 5o nicht genügt.

Im übrigen entspricht der Kopf 12 gemäß den Figuren
5 bis 7 der Ausführung, die anhand der Figuren 1
und 4 näher erläutert worden ist.

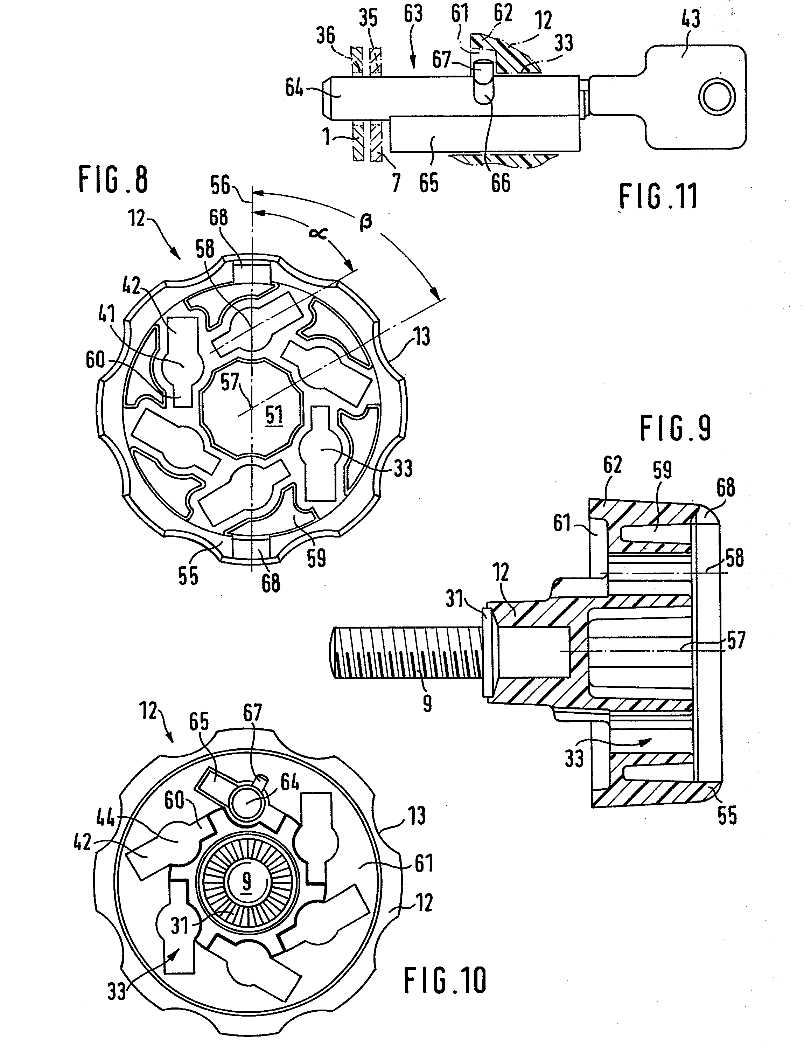

In den Figuren 8 bis 1o ist der Kopf 12 einer anderen
Klemmeinrichtung dargestellt, der sich in bestimmten
Merkmalen von den bisher erläuterten Ausführungs-

BAD ORIGINAL

formen unterscheidet. Jede dieser Maßnahmen ist jeweils für sich auch bei den anderen Ausführungsformen grundsätzlich anwendbar.

Ferner unterscheidet sich die Ausführungsform gemäß den Figuren 8 bis 1o noch dadurch, daß sie für ein Steckschloß anderer Bauart, wie es in Figur 11 dargestellt ist, in besonderer Weise angepaßt ausgebildet ist.

Primär unterscheidet sich die Ausführungsform der Figuren 8 bis 1o wesentlich dadurch, daß der Nutteil 42 der Durchgangsöffnung 33 nicht wie bei den bisher erläuterten Ausführungsformen radial angeordnet ist, sondern einen Winkel $\alpha$ gegenüber einer Radialebene 56 einnimmt, die durch die Achse 57 des Kopfes 12 und die Achse 58 der jeweiligen Durchgangsöffnung 33 verläuft. Dadurch können benachbarte Durchgangsöffnungen 33 sehr eng zu-einander angeordnet werden, wobei ferner hohe Festigkeit des Kopfes 12 gegen Zerstörung erreicht ist. Andererseits sind in den Kopf 12 gemäß den Figuren 8 bis 1o ebenso wie bei dem Kopf gemäß Figur 7 Vertiefungen 59 vorgesehen, die wie dort im wesentlichen zur Materialeinsparung dienen und die ein Arbeiten des den Kopf 12 bildenden Materials auch bei erheblichen Temperaturschwankungen begrenzen.

Der Kopf 12 zeigt ferner das Riefungen aufweisende Metallstück 31, das hier einstückig mit dem Gewindebolzen 9 ausgebildet und in den Kopf 12 in an sich bekannter Weise eingegossen ist.

Selbstverständlich können Durchgangsöffnungen 33, wie sie in den Figuren 4 und 7 im einzelnen dargestellt sind, die also zylindrischen Teil 41 und Nutteil 42 aufweisen, ebenfalls in der in den Figuren 8 bis 1o

BAD ORIGINAL

dargestellten Weise angeordnet sein. In den Figuren 8 bis 1o ist jedoch eine Ausführungsform dargestellt, die für Steckschlösser ausgebildet ist, die voneinander wegragende Ansätze aufweisen, weshalb die Durchgangsöffnung 33 neben dem zylindrischen Teil 41 und dem (ersten) Nutteil 42 einen weiteren zweiten Nutteil 6o besitzt, der entsprechend der Ausbildung des zugehörigen Steckschlosses andere Tiefen- und Breitenabmessungen besitzen kann wie der erste Nutteil 42. Die Abmessungen der Durchgangsöffnungen 33 in Längsrichtung ist entsprechend der der bereits erläuterten Ausführungsbeispiele gewählt, nämlich derart, daß das mittels des Schlüssels 43 drehbare Verriegelungselement in der Schließstellung den Kopf 12 hintergreift und dort in einer umlaufenden ringwannenförmigen Vertiefung 61 zur Anlage kommt. Durch den den Außenrand der ringwannenförmigen Vertiefung 61 bildenden Abschnitt 62 des Kopfes 12 ist das Verriegelungselement des Steckschlosses gegen Manipulation von außen geschützt.

In der Offenstellung des Steckschlosses kann dieses über die Durchgangsöffnung 33 herausgezogen werden, wobei die beiden vorspringenden Teile durch die beiden Nutteile 42 und 6o herausziehbar sind.

Eine solche Ausbildung des Kopfes 12 eignet sich nicht nur für Steckschlösser wie sie anhand Figur 1 erläutert worden sind, sondern auch für Steckschlösser anderer Bauart wie sie in Figur 11 dargestellt sind. Das Steckschloß 63 gemäß Figur 11 weist einen zylindrischen Teil 64 mit einem Bart 65 und einen mittels des Schlüssels 43 in einer Ausnehmung 66 zwischen zwei Stellungen verschwenkbaren Verriegelungsstift 67 als Verriegelungselement auf.

BAD ORIGINAL

0110035

Figur 11 zeigt ferner schematisch die Anordnung des Steckschlosses 63 in der Durchgangsöffnung 33 im Kopf 12 und in den Löchern 35 und 36 im Anpreßteil 7 bzw. in der Haltestütze 1.

Ferner zeigen Figur 1o und Figur 11 wie der Verriegelungsstift 67 den Kopf 12 in der ringwannenförmigen Vertiefung 61 hintergreift, während sich der Bart 65 des zylindrischen Teils 64 in der Durchgangsöffnung 33 , und zwar in deren zylindrischen Teil 41 und ersten Nutteil 42, befindet. In der Offenstellung ist der Verriegelungsstift 67 in den Verlauf des zweiten Nutteils 6o verschwenkt, wodurch das Steckschloß 63 abgezogen werden kann.

Ferner weist gemäß den Figuren 8 und 9 der Rand 55 des Kopfes 12 mindestens eine radiale Ausnehmung 68 auf, mit deren Hilfe ein eingesetzter Deckel (in den Figuren 8 bis 1o nicht dargestellt) leichter herausgehoben werden kann. Dabei kann der Deckel einen an den Verlauf der radialen Ausnehmung 68 angepaßten Ansatz (nicht dargestellt) aufweisen.

Wie bereits erwähnt kann durch geneigte Anordnung der Durchgangsöffnungen 33 im Kopf 12 eine höhere Packungsdichte erreicht werden. Vorzugsweise ist dabei der Neigungswinkel $\alpha$ dem Winkel $\beta$ gleich, um den benachbarte Durchgangsöffnungen von einander gegenüber der Achse 57 beabstandet sind. Bei dem Ausführungsbeispiel gemäß Figur 8 sind sechs über den Umfang verteilte Durchgangsöffnungen 33 entsprechend einem Winkel $\beta = 60^{\circ}$ vorgesehen. In gleicher Weise ist die Durchgangsöffnung 33 bzw. ist der Verlauf deren Nutteile 42,6o um $\alpha = 6o^{\circ}$ gegen die Radialebene 56 geneigt.

BAD ORIGINAL

Bei der Ausbildung der Vertiefungen 49 bzw. 59 ist es zweckmäßig, wenn das die Durchgangsöffnung 33 umgebende Material des Kopfes 12 im wesentlichen stets gleiche Wandstärke besitzt, wie sich das aus Fig. 8 ergibt und wie das in Figur 7 bei einer Vertiefung 49 durch Strichlinien angedeutet ist. Falls eine mittige Vertiefung 51 vorgesehen ist, ist deren Randverlauf ebenfalls entsprechend angepaßt ausgebildet (vgl. Figur 8).

Zusammenfassend kann eine Verriegelung in nahezu allen beliebigen Stellungen erfolgen, ohne daß von außen erkennbar ist, ob eine Verriegelung überhaupt durchgeführt worden ist. Die Öffnung des Schlosses ist verschmutzungs- und korrossionsgeschützt, ein Steckenlassen des Schlüssels ist sicher vermieden.

Ferner kann ein einziger Anwender das Steckschloß für unterschiedliche Anwendungsfälle verwenden, im Sommer beispielsweise zum Verriegeln einer Wohnwagenhalterung, im Winter zum Verriegeln des Ski-Trägers, er benötigt lediglich ein einziges Steckschloß mit einem einzigen Schlüssel, wobei bei Nichtgebrauch das Steckschloß am Schlüssel, und damit am Schlüsselbund verbleiben kann.

Selbstverständlich sind noch andere Ausführungsformen möglich.

BAD ORIGINAL

0110035

BAD ORIGINAL

ANSPRÜCHE

1. Verriegelbare Haltevorrichtung zum Verbinden eines
Halteteils mittels eines Anpreßteils mit einem
dritten Teil, mit einer Klemmeinrichtung, bei der mittels einer
Gewindebolzen-Anordnung (6) durch Drehen deren
Kopfes (12) -oder deren Mutter- das Anpreßteil (7)
gegen das Halteteil (1) derart verstellbar ist,
daß Halteteil (1) und Anpreßteil (7) das dritte
Teil zwischen sich einklemmen, und
mit einem exzentrisch in dem Kopf (12) -bzw. der
Mutter- angeordneten Schloß, dessen Verriegelungselement in der Schließstellung den Kopf (12) -bzw.
die Mutter- und/oder den Bolzen gegen Verdrehen
sichert,

dadurch gekennzeichnet,
daß das Schloß ein Steckschloß (32,63) ist das in
der Offenstellung durch eine angepaßt ausgebildete
achsparallele Durchgangsöffnung (33) im Kopf (12)
-bzw. in der Mutter- führbar ist, dessen Verriegelungselement (40,67) in der Schließstellung auf der
dem Anpreßteil (7) zugewandten Seite einrastet und
dessen dem Anpreßteil (7) zugewandtes Ende (34)
in der Schließstellung in ein entsprechend geformtes
Loch (35) im Anpreßteil (7) eingreift.

2. Haltevorrichtung nach Anspruch 1,
dadurch gekennzeichnet,
daß das dem Anpreßteil (7) zugewandte Ende (34) des
Steckschloßes (32,63) in der Schließstellung ferner
in ein entsprechend geformtes Loch (36) in dem
Halteteil (1) eingreift, das mit dem Loch (35) in
dem Anpreßteil (7) fluchtet.

3. Haltevorrichtung nach Anspruch 1 oder 2,
dadurch gekennzeichnet,
daß der Kopf (12) -bzw. die Mutter- mindestens zwei
gleichmäßig um dessen -bzw. deren- Achse verteilt
angeordnete Durchgangsöffnungen (33) aufweist.

4. Haltevorrichtung nach einem der Ansprüche 1 bis 3,
gekennzeichnet durch
einen auf den Kopf (12) -bzw. die Mutter- auf der
dem Anpreßteil (7) angewandten Seite aufsetzbaren
Deckel (45,50) zur Abdeckung einer Durchgangsöffnung (33).

5. Haltevorrichtung nach den Ansprüchen 3 und 4,
dadurch gekennzeichnet,
daß der Deckel (45,50) alle Durchgangsöffnungen (33)
abdeckt.

BAD ORIGINAL

6. Haltevorrichtung nach Anspruch 4 oder 5, gekennzeichnet durch eine kreisförmige Nut (47,53) im Kopf (12),in die ein Ringrand (46) bzw. eine ringförmige Erhebung (52) des Deckels (45,5o) rastend eingreift.

7. Haltevorrichtung nach einem der Ansprüche 1 bis 6, dadurch gekennzeichnet, daß der Kopf (12) auf der dem Anpreßteil (7) nächstliegenden und auf ihm bei Klemmen aufliegenden Seite eine Riefung aufweist.

8. Haltevorrichtung nach Anspruch 7, dadurch gekennzeichnet, daß die Riefung in einem mit dem Kopf (12) einstückigen Metallstück (31) vorgesehen ist.

9. Haltevorrichtung nach Anspruch 7 oder 8, dadurch gekennzeichnet, daß das Anpreßteil (7) im Auflagebereich der Riefung aufgerauht ist.

1o. Haltevorrichtung nach einem der Anprüche 1 bis 9, dadurch gekennzeichnet, daß der Kopf (12), gegebenenfalls auch der Deckel (45,5o), aus Kunststoff besteht bzw. bestehen.

11. Haltevorrichtung nach einem der Ansprüche 3 bis 1o, dadurch gekennzeichnet, daß mehr als ein Steckschloß(32,63)einführbar sind und das Anpreßteil (7) , gegebenenfalls auch das Halteteil (1), jeweils mehr als ein,gegebenenfalls paarweise fluchtendes Loch (35 bzw. 36) aufweist bzw. aufweisen.

BAD ORIGINAL

12. Haltevorrichtung nach einem der Ansprüche 1 bis 11, dadurch gekennzeichnet, daß das Halteteil durch die Haltestütze (1) eines Dachgepäckträgers für Kraftfahrzeuge oder dergleichen gebildet ist, dessen stegartige Unterkante (2) in die Dachrinne des Kraftfahrzeugs einsetzbar ist, daß das Anpreßteil (7) ein hakenförmiges Unterende (8) aufweist, das die Dachrinne des Kraftfahrzeugs untergreift, und daß die Klemmeinrichtung das Anpreßteil (7) und die Haltestütze (1) so gegeneinander verstellt, daß das hakenförmige Unterende (8) von unten gegen die Dachrinne und die stegartige Unterkante (2) von oben in die Dachrinne drücken.

13. Haltevorrichtung nach einem der Ansprüche 1 bis 12, dadurch gekennzeichnet, daß das Steckschloß (32,63) einen zylindrischen Abschnitt (37,38;64) und mindestens einen etwa radial wegragenden Bart (39;65) sowie die mindestens eine Durchgangsöffnung (33) entsprechend einen zylindrischen Teil (41) und mindestens einen Nutteil (42,6o) aufweisen und daß der Nutteil(42,6o) unter einem Winkel (α) gegenüber einer Radialebene (56) durch die Achse (57) des Kopfes (12) und die Achse (58) des zylindrischen Teils (41) der Durchgangsöffnung (33) in dem Kopf (12) ausgebildet ist.

14. Haltevorrichtung nach Anspruch 13 und Anspruch 3, dadurch gekennzeichnet, daß der Winkel (α) gegenüber der Radialebene (56) dem Winkel (β) zwischen den Achsen (58) benachbarte Durchgangsöffnungen (33) entspricht.

BAD ORIGINAL

FIG.1

FIG.4

0110035

FIG. 3

FIG. 2

FIG.5

FIG.7

FIG.6

0110035

**FIG.8**

**FIG.11**

**FIG.9**

**FIG.10**

| | Europäisches Patentamt | **EUROPÄISCHER RECHERCHENBERICHT** | 0110035 Nummer der Anmeldung |
| --- | --- | --- | --- |

EP 83 10 9134

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| --- | --- | --- | --- |
| Y | FR-A-2 032 852 (MARKER)<br>* Seite 6, Zeilen 2-17; Abbildungen 4,6 * | 1 | F 16 B 41/00<br>B 60 R 9/04 |
| A | * Abbildungen 4,6 * | 2,3,12 | |
| | --- | | |
| Y | DE-A-1 655 826 (WUNDER)<br>* Seite 6, Zeilen 4-14; Abbildung 4 * | 1 | |
| A | * Seite 6, Zeilen 4-14 * | 13 | |
| | --- | | |
| A | DE-B-2 426 419 (WUNDER)<br>* Spalte 8, Zeilen 3-7; Abbildung 3 * | 4,5,10 | **RECHERCHIERTE SACHGEBIETE (Int. Cl. ³)** |
| | --- | | |
| A | US-A-3 348 747 (VUARCHEX)<br>* Spalte 4, Zeilen 38-45 * | 7,9 | B 60 R 9/00<br>F 16 B 41/00<br>E 05 B 73/00<br>E 05 B 39/00 |
| | ----- | | |

Der vorliegende Recherchenbericht wurde für alle Patentansprüche erstellt.

| Recherchenort<br>DEN HAAG | Abschlußdatum der Recherche<br>24-02-1984 | Prüfer<br>OSBORNE J. |
| --- | --- | --- |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82